# FASCICULE DE BREVET EUROPEEN

(11) **EP 4 214 440 B1**
(45) Date de publication et mention de la délivrance du brevet: **21.08.2024**
(21) Numéro de dépôt: 21765966.3
(22) Date de dépôt: 29.06.2021
(51) Int. Cl.: F21S 41/14, F21S 41/32, F21S 41/24, F21S 43/237, F21S 43/245, F21S 43/247, F21S 43/31, F21S 45/10, F21S 45/20, F21S 43/13, F21S 43/14, B60Q 1/00

(54) **BLOC OPTIQUE DE VEHICULE À PROTECTION THERMIQUE**
FAHRZEUGBELEUCHTUNGSEINHEIT MIT WÄRMESCHUTZ
VEHICLE OPTICAL UNIT WITH THERMAL PROTECTION

(30) Priorité: 18.09.2020 FR 2009499
(43) Date de publication de la demande: 26.07.2023
(73) Titulaire: Stellantis Auto SAS, 78300 Poissy (FR)
(72) Inventeur: PERON, Rodolphe, 95220 HERBLAY (FR); SIMANDRE, Stephane, 56660 ST JEAN BREVELAY (FR)
(86) Numéro de dépôt international: PCT/FR2021/051197
(87) Numéro de publication internationale: WO 2022/058665

(56) Documents cités:
- EP-A1- 2 149 748
- EP-A1- 2 731 826
- EP-A1- 3 388 740
- EP-A2- 1 265 024
- EP-B1- 2 149 748
- EP-B1- 2 731 826
- WO-A1-2020/174140
- CN-Y- 201 293 251
- JP-A- 2012 048 896
- JP-A- 2012 155 967

## Description

L'invention concerne un bloc optique de véhicule, notamment un feu arrière, et un véhicule équipé d'un tel bloc optique.

Les véhicules comportent de manière générale des blocs optiques tel qu'un feu arrière ou phare avant. Afin d'améliorer l'esthétique du véhicule, il est connu d'intégrer dans le bloc optique un guide de lumière rectiligne, illuminé à l'aide d'une LED, afin de réaliser un éclairage perçu comme un trait de lumière. Ce guide de lumière éclairée par une LED (diode électroluminescente) permet par exemple de réaliser la fonction de feux de position. Le bloc optique comporte aussi d'autres sources de lumière permettant de réaliser d'autres fonctions, comme par exemple la fonction feux de stop ou antibrouillard dans un feu arrière, ou la fonction d'éclairage de la route dans un phare avant. Ces autres fonctions sont réalisées par des lampes à incandescence, comme par exemple des lampes à halogène. Un tel bloc optique formant un feu arrière est décrit dans le document FR2 994 548. L'inconvénient est que les lampes à incandescence produisent beaucoup de chaleur au niveau de leur bulbe. Si la LED qui éclaire le guide de lumière est disposée au-dessus d'une telle lampe, la chaleur produite par cette lampe va monter chauffer la LED et la plaque comportant l'électronique qui alimente. Or il est connu que les LED sont sensibles à la chaleur, et qu'en particulier une exposition à la chaleur réduit leur durée de vie. De plus, afin de rendre le guide de lumière bien visible et améliorer l'attractivité du véhicule, il est intéressant de réduire la hauteur des blocs optiques, augmentant les problèmes liés à la chaleur produite par les lampes à incandescence.

On connaît par le document EP2731826A1 un feu arrière d'automobile.

L'objectif de l'invention est de remédier à ces inconvénients. En particulier, un des buts de l'invention est de proposer un feu de véhicule comportant un bloc optique avec un guide de lumière dont la tenue est améliorée et améliorant la protection thermique des sources de lumières.

Ce but est atteint selon l'invention, grâce à un bloc optique de véhicule décrit dans la revendication 1.

C'est-à-dire que la paroi écran rallonge la distance parcourue par l'air chaud entre l'ampoule et la plaque électronique, lorsque l'ampoule est allumée, par rapport à une situation d'absence d'écran. On entend par se déplacer directement le fait de prendre le plus court chemin. La LED est une diode électroluminescente.

Ainsi avantageusement, et lorsque le bloc optique est installé sur un véhicule de sorte que la carte électronique est disposée au moins en partie au-dessus de l'ampoule et du réflecteur, c'est-à-dire plus haut suivant la direction verticale du véhicule, l'air chauffé par l'ampoule peut se refroidir d'avantage avant d'arriver au niveau de la carte électronique, notamment par contact avec les différents composants du bloc optique, notamment la vitre, des parties du boîtier, et en se mélangeant avec l'air non chauffé par l'ampoule. La carte électronique et donc les composants électroniques fixés sur cette carte sont donc moins chauffés, et la durée des vies de ces composants améliorés.

Selon l'invention, le bloc optique comporte un guide de lumière éclairé par la LED, un support du guide de lumière maintenant ledit guide de lumière en position, ledit support comportant la paroi d'écran.

Ainsi avantageusement, la plaque étant intégrée dans une pièce du bloc optique, elle ne nécessite pas un montage spécifique.

Selon l'invention, le boitier comporte une paroi de fond disposée à l'opposé de l'ouverture du réflecteur, la carte électronique étant fixée à la paroi de fond, le guide de lumière ayant une forme de L dont une première branche possède une extrémité en vis-à-vis de la LED et une deuxième branche qui s'étend depuis la première branche à distance de la carte électronique et du côté opposé à la paroi de fond par rapport à cette carte électronique, le support de guide de lumière étant fixé à ladite carte électronique ou au boîtier.

Selon l'invention, la deuxième branche du guide de lumière, comprenant respectivement une première branche et une deuxième branche suivant respectivement la première et la deuxième branche du guide de lumière, des moyens de maintien du guide de lumière, et une patte de fixation s'étendant de la deuxième branche du support jusqu'à la carte électronique ou au boîtier, la paroi écran s'étendant entre la patte de fixation et la deuxième branche.

Ainsi avantageusement, le support et sa patte de fixation participent à la fonction d'écran. De plus, la paroi écran vient aussi renforcer la patte de fixation.

Dans un autre mode de réalisation de l'invention, le guide de lumière est fixé par l'une de ces extrémités à la carte électronique à proximité de la LED ou à la LED. Ainsi avantageusement, le positionnement de l'extrémité du guide de lumière par rapport à la LED peut être précis, de sorte à permettre l'insertion d'un maximum de lumière produite par la LED dans ledit guide de lumière.

L'invention porte aussi sur un feu arrière de véhicule comportant un bloc optique tel que décrit précédemment, ainsi que sur un véhicule comportant un tel bloc optique disposé de sorte que la lampe et le réflecteur sont en dessous de la carte électronique selon l'axe vertical du véhicule.

L'invention sera mieux comprise à la lecture de la description qui va suivre, donnée uniquement à titre d'exemple et faite en se référant aux dessins annexés, sur lesquels
[fig. 1] est une vue en perspective d'un bloc optique suivant l'invention formant un feu arrière de véhicule, le bloc optique étant représenté sans la vitre.
[fig. 2] est une autre vue en perspective du feu arrière de la fig. 1 sans les différents éléments d'habillage, montrant un guide de lumière avec un support de guide de lumière, ainsi qu'un réflecteur.
[Fig. 3] est une vue du bloc optique sans la vitre, le guide de lumière et son support.
[Fig. 4] est une vue d'un ensemble formée par le guide de lumière, son support de guide de lumière, et la carte électronique.
[Fig. 5] est une vue de l'arrière d'un véhicule comporte un bloc optique suivant l'invention.

Les dessins sont des représentations schématiques pour faciliter la compréhension de l'invention. Les composants ne sont pas forcément représentés à l'échelle. Les mêmes références correspondent aux mêmes composants d'une figure à l'autre.

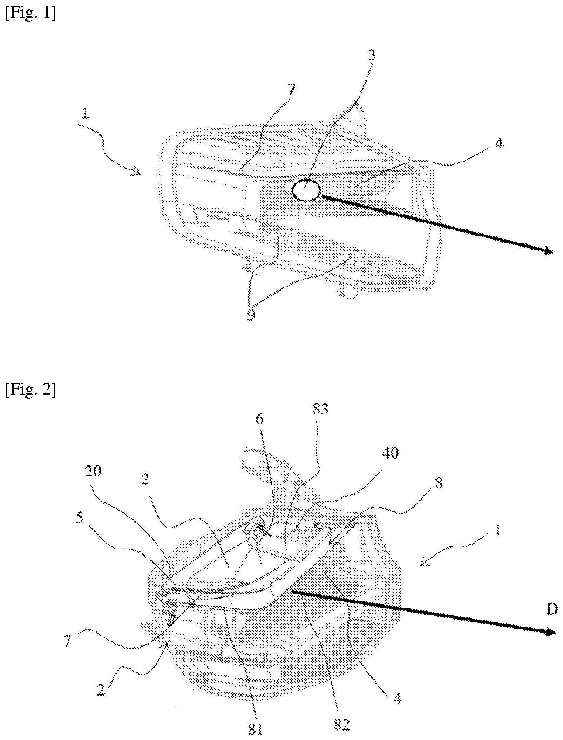

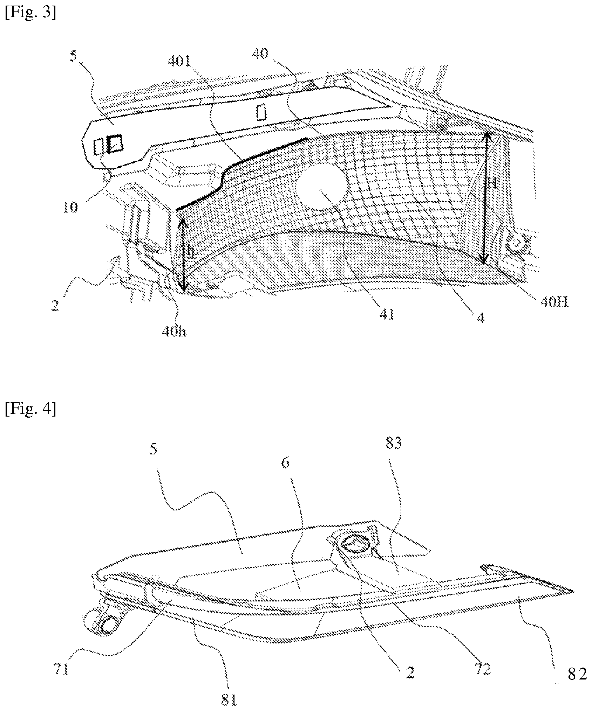

La fig. 1 montre un bloc optique 1 formant un feu arrière de véhicule 11. Le bloc optique 1 comporte un boîtier 2, illustré en figure 2, une vitre fixée au boîtier 2, non illustrée pour simplifier la représentation, et des moyens de signalisation. Dans l'exemple de la figure 1, le bloc optique 1 comporte une fonction de signalisation du freinage, connu sous le terme de feu de stop, réalisé par une lampe à incandescence 3 installée à l'intérieur d'un réflecteur 4, deux autres fonctions de signalisation 9 tels que clignotant et feu de recul, ainsi qu'une troisième fonction de signalisation telle qu'un feu de position. Le feu de position est réalisé par un guide de lumière 7 éclairé par une diode électroluminescente 10, connu sous le terme de LED. Le réflecteur 4 est concave, et la lampe 3 est disposé à l'intérieur du réflecteur 4. Le réflecteur 4 et la lampe 3 sont disposés de sorte à diriger la lumière produite par la lampe 3 en direction de la vitre, selon une direction principale de réflexion D. Pour un feu arrière, la lumière est dirigée principalement vers l'arrière du véhicule 11, principalement suivant la direction longitudinale dudit véhicule 11 de sorte à être visible des autres véhicules situés derrière. Le réflecteur 4 comporte une ouverture par laquelle la lumière émise par la lampe 3 et réfléchie par le réflecteur 4 sort de la partie concave dans cette direction de réflexion D, ladite ouverture étant délimitée par un bord extérieur 40, comme illustré en figure 2 et 3.

Comme illustré en figure 3, le réflecteur 4 comporte un passage 41 d'ampoule situé au fond de la forme concave et par lequel est introduite l'ampoule 3. Dans le mode de réalisation des figures, le réflecteur 3 est réalisé par la forme du boîtier 2, par exemple par la forme d'une paroi de fond 20 dudit boîtier 2. La paroi de fond 20 est la paroi du boîtier 2 en vis-à-vis de la partie de la vitre par laquelle la lumière produite par la lampe 3 et réfléchie par le réflecteur 4 sort du bloc optique. Cette paroi de fond 20 est entourée par des parois latérales sur lesquelles la vitre se fixe classiquement. Ces parois latérales peuvent être de dimensions très variables en fonction de la forme de la vitre. Par exemple, lorsque la vitre s'étend jusqu'à la paroi de fond 20, sur l'un des côtés du bloc optique, la paroi latérale sur ce côté peut être réduite à une nervure sur laquelle vient s'emboiter ou se coller la vitre. En figure 2, le boîtier 2 comporte sur deux côtés adjacents des parois latérales réduites à une nervure, et sur les deux autres côtés adjacents deux autres parois latérales de plus grandes dimensions, la paroi de fond étant de forme générale rectangulaire. Dans cette exemple, la vitre du bloc optique 2 s'étend jusqu'à la paroi de fond 20 au niveau des deux côtés dont les parois latérales sont réduites à des nervures, et s'étend jusqu'à l'extrémité des parois latérales de plus grandes dimensions sur les deux autres côtés du boitier, extrémités distantes de la paroi de fond 2.

En variante, le réflecteur 3 peut être une pièce ajoutée et fixée au boîtier 2.

Comme illustré en figure 2, le guide de lumière 7 est éclairé par la LED 10 fixée sur une carte électronique 5. Le guide de lumière 7 est sous la forme d'une tige courbée en forme de « L ». Il est fixé à l'une de ses extrémités à la plaque électronique 5 au niveau de la LED 10 de manière à ce que la lumière produite par ladite LED 10 soit injectée dans le guide de lumière 7 par cette extrémité. Le guide de lumière 7 a une forme générale en L, c'est-à-dire une première branche 71 reliée à une deuxième branche 72 sensiblement perpendiculaire l'une à l'autre. La zone de liaison entre ces deux branches 71 et 72 est courbe dans la représentation de la figure 2. En variante, l'angle entre les deux branches 71 et 72 peut être plus ouvert ou plus fermé. Le guide de lumière 7 s'étend dans un plan sensiblement parallèle à la direction principale D d'émission de la lumière réfléchie par le réflecteur 4.

La carte électronique 5 est fixée sur la paroi de fond 20 du boitier 2. Un support du guide de lumière maintenant ledit guide de lumière en position. Le support 8 a une forme similaire au guide de lumière 7 de manière à le suivre. Il comporte des moyens de maintien du guide de lumière 7. Dans le mode de réalisation présenté dans les figures 2 et 4, le support 8 est aussi en forme de « L », avec respectivement une première branche 81 et une deuxième branche 82 qui suivent chacune respectivement la première branche 71 et la deuxième branche 72 du guide de lumière 7. Ces branches 81 et 82 du support 8 ont une section en V, et le guide de lumière 7 est disposé au fond du V. Le V est orienté de sorte que son ouverture soit dirigée vers la vitre, c'est-à-dire à l'opposé du boitier 2, afin que la lumière diffusée par le guide de lumière 7 soit visible de l'extérieur du bloc optique 1. Afin d'augmenter la quantité de lumière émise vers l'extérieur, l'intérieur du V du support 8 peut être recouvert d'un revêtement réfléchissant, comme par exemple du chrome. Des moyens de fixations sont prévus pour maintenir le guide de lumière 7 dans la forme en V du support 8, comme par exemple des systèmes de clips ou des points de colles.

La première branche 81 du support 8 est fixée sur la carte électronique 5, à proximité de la LED 10. Une patte de fixation s'étend depuis la deuxième branche 82 du support jusqu'à la carte électronique 5 sur laquelle elle se fixe. La fixation du support 8 sur la carte électronique est réalisée par exemple par un système de clippage, ou par des vis, ou encore par les deux. La carte électronique 5, le guide de lumière 7 et le support 8 forment un ensemble complet qui peut être monté d'une pièce dans le bloc optique 1.

Une paroi écran 6 s'étend depuis la deuxième branche 82 du support 8 jusqu'à une partie du bord extérieur 40 du réflecteur 4. Cette paroi écran 6 ferme l'espace entre le bord du réflecteur 40 et le support 8 de sorte à empêcher l'air chauffé par la lampe de se déplacer directement vers la carte électronique en sortant du réflecteur. Un bord de cette paroi écran 6 suit le chemin de ladite partie du bord extérieur 40 de réflecteur 4. La paroi écran 6 s'étend aussi le long de la patte de fixation 83 de sorte à ce que ladite patte de fixation 83 participe au blocage du passage de l'air chaud provenant de l'intérieur du réflecteur 4. Le guide de lumière 7 et le support 8 longent la vitre, notamment la partie de la vitre par laquelle se diffuse la lumière de la lampe 3 réfléchie par le réflecteur 4. La deuxième branche 72 du guide de lumière 7 et la deuxième branche 82 du support 8 sont donc distants de la carte électronique 5. La paroi écran 6 s'étend donc depuis une partie du bord extérieur 40 du réflecteur 4 jusqu'à la deuxième branche 82 du support 8. La carte électronique 5 est disposée à l'extérieur du réflecteur 4, plus près de la paroi de fond 20 du boitier 2 que ne l'est le bord extérieur 40 du réflecteur 4. Lorsque le bloc optique 1 est disposé sur un véhicule 11, ladite carte électronique 5 est située au-dessus dudit réflecteur 4, c'est-à-dire plus haut que le réflecteur 4 en se plaçant dans le référentiel du véhicule et suivant l'axe verticale dudit véhicule. Dans le mode de réalisation des figures 1 et 2, la carte électronique 5 est juste au-dessus du réflecteur 4. L'air chauffé par la lampe 3 est bloqué par la paroi écran 6 et ne peut aller directement, c'est-à-dire par le plus court chemin, vers la carte électronique 5, et notamment vers la partie de la carte 5 comportant la LED 10. La paroi écran 6 est contre la partie du bord extérieur 40 du réflecteur 4 située entre la lampe 3 et la carte électronique 5. Dans une variante, le support 8 du guide de lumière 7 participe au blocage de l'air chaud sortant du réflecteur 4.

En définissant les axes X, Y et Z respectivement les axes longitudinal, transversal et vertical du véhicule 11, lorsque le bloc optique 1 est disposé sur le véhicule 11, la paroi écran 6 s'étend sur tout le long du bord extérieur 40 du réflecteur disposé en partie supérieure du réflecteur, c'est-à-dire sur la partie du bord extérieur 40 située au-dessus de la lampe 3. Dans le mode de réalisation des figures 1, 2 et 3, le bord extérieur 40 définit une forme générale rectangulaire, et la partie supérieure du bord extérieur 40 s'étend transversalement au-dessus du réflecteur 4. Ainsi, l'air chauffé par la lampe 3 ne peut pas ou difficilement remonter vers la carte électronique 5. Dans une autre variante illustrée en figure 3, le réflecteur 5 a une forme générale trapézoïdale, c'est-à-dire que le bord extérieur 40 a une forme générale en trapèze, et la partie concave est située à l'intérieur du trapèze. La petite base de cette forme en trapèze forme un premier côté latéral 40h du réflecteur, c'est-à-dire une partie latérale 40h du bord extérieur 40 sensiblement verticale et s'étendant sur une hauteur h, et la grande base de cette forme en trapèze forme le deuxième côté latéral 40H du réflecteur 4, c'est-à-dire une deuxième partie latérale 40h du bord extérieur 40 sensiblement verticale qui s'étend sur une hauteur H plus grande que la hauteur h. La partie supérieure du bord extérieur 40 s'étend d'un côté latéral 40h à l'autre côté latéral 40H. Cette forme particulière du réflecteur 4 crée un volume d'air plus faible du côté du premier côté latéral 40h que celui du côté du deuxième côté 40H. L'air est ainsi plus chaud dans la partie du réflecteur 4 à proximité du premier côté latéral 40h lorsque la lampe 3 est allumée que dans la partie opposée près du deuxième côté latéral 40H. Dans ce mode de réalisation, la paroi écran 6 s'étend transversalement le long du bord supérieur 40 depuis approximativement la verticale de la lampe 3, où est positionnée la patte de fixation 83 jusqu'au premier bord latéral 40h du réflecteur 4, ou en variante jusqu'à la partie du support 8 qui passe au-dessus du réflecteur 5 depuis sa fixation à proximité de la LED 10. Cette partie du bord extérieur 40 longée par la paroi écran 6 est illustrée par le trait épais 401 en figure 3. Ainsi, l'air situé dans cette partie la plus chaude de l'intérieur du réflecteur 4 ne peut pas remonter directement vers la carte électronique 5, lorsque la lampe est allumée, mais doit parcourir un plus long parcours.

Comme illustré en figure 3, la carte électronique 5 est de forme allongée, s'étendant transversalement, et la LED 10 disposée sur l'extrémité de la carte électronique 5 du même côté du bloc optique 1 que celui où est le premier côté latéral 40h.

De l'air chaud peut remonter le long du bord extérieur 40 du réflecteur 5, mais du deuxième côté latéral 40H du réflecteur 4. D'une part l'air situé de ce côté est moins chaud du fait d'un plus grand volume intérieur du réflecteur de ce côté, et d'autre part le parcours suivi par l'air le plus chaud pour venir jusqu'à la carte électronique 5 depuis la lampe 3, notamment sur la partie de la carte 5 comportant la LED 10, et plus long. L'air chauffé a le temps de se refroidir au contact des différentes surfaces à l'intérieur du bloc optique 1 avant d'arriver au niveau de la carte électronique 5. Cette variante de réalisation est visible en figure 3.

La carte électronique 5 comporte la LED 10 et d'autres composants électroniques nécessaire à l'alimentation de la LED. Elle a aussi un rôle de dissipation de la chaleur produite par la LED 10 et les composants électroniques qui sont fixés sur elle.

Les figures 1 et 2 illustrent un bloc optique dont le réflecteur 4 est formé par la forme de la paroi de fond 20 du boîtier 2, avec la paroi écran s'étendant jusqu'au bord extérieur du réflecteur.

En variante, la paroi écran 6 peut s'étend jusqu'à la paroi de fond 20, entre le réflecteur 4 et la carte électronique 5.

Dans une variante, le réflecteur 5 peut être une pièce fixée au boitier 2, par exemple à la paroi de fond 20. Dans cette variante, la paroi écran 6 s'étend jusqu'au bord extérieur du réflecteur 5, ou en autre variante jusqu'à la paroi de fond, entre le réflecteur 4 et la carte électronique 5.

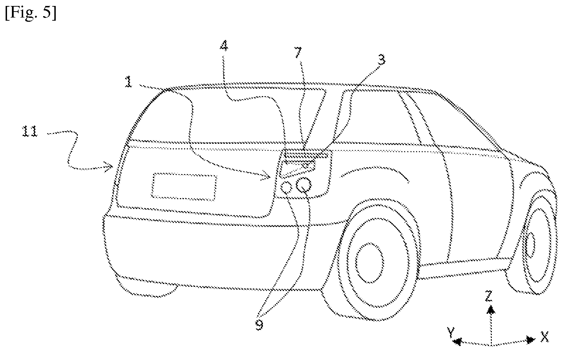

La figure 5 illustre un véhicule 11 comportant le bloc optique 1 formant un feu arrière. Une telle conception peut aussi être appliquée pour réaliser un bloc optique de projecteur avant de véhicule, le réflecteur 4 et la lampe 3 réalisant une fonction d'éclairage de type code ou phare de route.

## Revendications

1. Bloc optique (1) de véhicule comprenant, un boîtier (2) sur lequel est fixée une vitre, une lampe (3) à incandescence disposée à l'intérieur d'un réflecteur (4) concave réfléchissant la lumière produite par la lampe (3), le réflecteur (4) et la lampe (3) étant disposés à l'intérieur du bloc optique (1) de sorte à ce que la lumière produite par ladite lampe (3) soit réfléchie en direction de la vitre, le réflecteur (4) comportant un bord extérieur (40) définissant une ouverture du réflecteur par laquelle la lumière réfléchie par ledit réflecteur sort vers la vitre, le bloc optique (1) comprend en outre une LED (10) fixée sur une carte électronique (5), la LED (10) et la carte électronique (5) étant disposées à l'extérieur du réflecteur (4) et dans le bloc optique (1), ledit bloc optique (1) comportant une paroi écran (6) s'étendant depuis une partie du bord extérieur du réflecteur (4) vers la vitre, le long du bord extérieur (40) situé entre le réflecteur (4) et la carte électronique (5) de sorte à empêcher l'air chauffé par la lampe (3) de se déplacer directement vers une partie de la carte électronique (5) en sortant du réflecteur (4), de préférence la partie de la carte électronique comportant la LED (10) ;
le bloc optique (1) comportant un guide de lumière (7) éclairé par la LED (10), un support (8) du guide de lumière (7) maintenant ledit guide de lumière (7) en position, ledit support (8) comportant la paroi d'écran (6) ;
le boitier (2) comportant une paroi de fond (20) disposée à l'opposé de l'ouverture du réflecteur (4), la carte électronique (5) étant fixée à la paroi de fond (20), le guide de lumière (7) ayant une forme de L dont une première branche (71) possède une extrémité en vis-à-vis de la LED et une deuxième branche (72) qui s'étend depuis la première branche à distance de la carte électronique (5) et du côté opposé à la paroi de fond (20) par rapport à cette carte électronique (5), le support (8) de guide de lumière (7) étant fixé à ladite carte électronique (5) ou au boîtier (2) ;
le bloc optique étant **caractérisé en ce que** le support a une forme de L équivalente à la forme en « L » du guide de lumière (7), comprenant respectivement une première branche (81) et une deuxième branche (82) suivant respectivement la première (71) et la deuxième branche (72) du guide de lumière (7), des moyens de maintien du guide de lumière, et une patte de fixation (83) s'étendant de la deuxième branche du support (8) jusqu'à la carte électronique ou au boîtier, la paroi écran (6) s'étendant entre la patte de fixation (83) et la deuxième branche (82).

2. Bloc optique (1) suivant la revendication 1 dont le guide de lumière (7) est fixé par l'une de ces extrémités à la carte électronique à proximité de la LED (10) ou à la LED.

3. Feu arrière de véhicule comportant un bloc optique (1) selon l'une des revendications précédentes.

4. Véhicule (11) comportant un bloc optique (1) selon l'une des revendications de 1 à 2 ou un feu arrière selon la revendication 6, disposé de sorte que la lampe (3) et le réflecteur (4) sont en dessous de la carte électronique (5) selon l'axe vertical du véhicule.

## Patentansprüche

1. Fahrzeugoptikeinheit (1), umfassend ein Gehäuse (2), an dem ein Fenster befestigt ist, eine Glühlampe (3), die in einem konkaven Reflektor (4) angeordnet ist, der das von der Lampe (3) erzeugte Licht reflektiert, wobei der Reflektor ( 4) und wobei die Lampe (3) innerhalb der optischen Einheit (1) so angeordnet ist, dass das von der Lampe (3) erzeugte Licht in Richtung des Fensters reflektiert wird, wobei der Reflektor (4) einen äußeren Rand (40) definiert eine Öffnung des Reflektors, durch die das vom Reflektor reflektierte Licht in Richtung des Fensters austritt, die optische Einheit (1) außerdem eine LED (10) umfasst, die auf einer elektronischen Karte (5) befestigt ist, wobei die LED (10) und die elektronische Karte ( 5) außerhalb des Reflektors (4) und in der optischen Einheit (1) angeordnet ist, wobei die optische Einheit (1) eine Schirmwand (6) aufweist, die sich von einem Teil der Außenkante des Reflektors (4) in Richtung Glas erstreckt, entlang der Außenkante (40) zwischen dem Reflektor (4) und der Elektronikkarte (5), um zu verhindern, dass sich die von der Lampe (3) erwärmte Luft direkt auf einen Teil der Elektronikkarte (5) zubewegt und den Reflektor verlässt (4), vorzugsweise der Teil der elektronischen Karte, der die LED (10) umfasst;
wobei die optische Einheit (1) einen von der LED (10) beleuchteten Lichtleiter (7) umfasst, wobei ein Träger (8) des Lichtleiters (7) den Lichtleiter (7) in Position hält, wobei der Träger (8) umfasst Siebwand (6);
wobei das Gehäuse (2) eine Bodenwand (20) aufweist, die gegenüber der Öffnung des Reflektors (4) angeordnet ist, wobei die elektronische Karte (5) an der Bodenwand (20) befestigt ist und der Lichtleiter (7) eine L-Form aufweist wobei ein erster Zweig (71) ein der LED zugewandtes Ende und einen zweiten Zweig (72) aufweist, der sich vom ersten Zweig in einem Abstand von der elektronischen Karte (5) und auf der der Bodenwand (20) gegenüber dieser gegenüberliegenden Seite erstreckt elektronische Karte (5), wobei der Lichtleiterträger (8) (7) an der elektronischen Karte (5) oder am Gehäuse (2) befestigt ist;
wobei die optische Einheit **dadurch gekennzeichnet ist, dass** der Träger eine L-Form aufweist, die der "L"-Form des Lichtleiters (7) entspricht und jeweils einen ersten Zweig (81) und einen zweiten Zweig (82) umfasst, der jeweils auf den ersten (71) folgt. und der zweite Zweig (72) des Lichtleiters (7), Mittel zum Halten des Lichtleiters und eine Befestigungslasche (83), die sich vom zweiten Zweig des Trägers (8) bis zur elektronischen Karte oder dem Gehäuse erstreckt Schirmwand (6), die sich zwischen der Befestigungslasche (83) und dem zweiten Zweig (82) erstreckt.

2. Optische Einheit (1) nach Anspruch 1, deren Lichtleiter (7) mit einem dieser Enden an der elektronischen Karte in der Nähe der LED (10) oder an der LED befestigt ist.

3. Fahrzeugrückleuchte umfassend eine optische Einheit (1) nach einem der vorhergehenden Ansprüche.

4. Fahrzeug (11) umfassend eine optische Einheit (1) nach einem der Ansprüche 1 bis 2 oder ein Rücklicht nach Anspruch 6, angeordnet so, dass die Lampe (3) und der Reflektor (4) unterhalb der elektronischen Karte liegen (5) entlang der Hochachse des Fahrzeugs.

## Claims

1. Vehicle optical unit (1) comprising, a housing (2) on which a window is fixed, an incandescent lamp (3) arranged inside a concave reflector (4) reflecting the light produced by the lamp (3), the reflector (4) and the lamp (3) being arranged inside the optical unit (1) so that the light produced by said lamp (3) is reflected in the direction of the window, the reflector (4) comprising an outer edge (40) defining an opening of the reflector through which the light reflected by said reflector exits towards the window, the optical unit (1) further comprises an LED (10) fixed on an electronic card (5 ), the LED (10) and the electronic card (5) being arranged outside the reflector (4) and in the optical unit (1), said optical unit (1) comprising a screen wall (6) extending from a part of the outer edge of the reflector (4) towards the glass, along the outer edge (40) located between the reflector (4) and the electronic board (5) so as to prevent air heated by the lamp (3 ) to move directly towards a part of the electronic card (5) leaving the reflector (4), preferably the part of the electronic card comprising the LED (10);
the optical unit (1) comprising a light guide (7) illuminated by the LED (10), a support (8) of the light guide (7) holding said light guide (7) in position, said support (8) comprising the screen wall (6);
the housing (2) comprising a bottom wall (20) arranged opposite the opening of the reflector (4), the electronic card (5) being fixed to the bottom wall (20), the light guide ( 7) having an L shape of which a first branch (71) has one end facing the LED and a second branch (72) which extends from the first branch at a distance from the electronic card (5) and on the side opposite the bottom wall (20) relative to this electronic card (5), the light guide support (8) (7) being fixed to said electronic card (5) or to the housing (2);
the optical unit being **characterized in that** the support has an L shape equivalent to the "L" shape of the light guide (7), comprising respectively a first branch (81) and a second branch (82) respectively following the first (71) and the second branch (72) of the light guide (7), means for holding the light guide, and a fixing tab (83) extending from the second branch of the support (8) up to the electronic card or the housing, the screen wall (6) extending between the fixing tab (83) and the second branch (82).

2. Optical unit (1) according to claim 1, the light guide (7) of which is fixed by one of these ends to the electronic card near the LED (10) or to the LED.

3. Vehicle rear light comprising an optical unit (1) according to one of the preceding claims.

4. Vehicle (11) comprising an optical unit (1) according to one of claims 1 to 2 or a rear light according to claim 6, arranged so that the lamp (3) and the reflector (4) are below of the electronic card (5) along the vertical axis of the vehicle.
